# EUROPÄISCHE PATENTSCHRIFT

(11) **EP 3 380 573 B1**
(45) Veröffentlichungstag und Bekanntmachung des Hinweises auf die Patenterteilung: **26.01.2022**
(21) Anmeldenummer: 16787727.3
(22) Anmeldetag: 21.10.2016
(51) Int. Cl.: C09D 11/101, C09D 11/102, C09D 11/107, C09D 11/30

(54) **HYBRIDTINTE AUF WASSERBASIS SOWIE VERFAHREN ZUR HERSTELLUNG EINES MIT DIESER TINTE GEDRUCKTEN ARTIKELS**
WATER-BASED HYBRID INK, AND METHOD FOR THE PRODUCTION OF AN ARTICLE PRINTED WITH SAID INK
ENCRE HYBRIDE AQUEUSE AINSI QUE PROCÉDÉ D'OBTENTION D'UN ARTICLE IMPRIMÉ AVEC CETTE ENCRE

(30) Priorität: 25.11.2015 DE 102015015143
(43) Veröffentlichungstag der Anmeldung: 03.10.2018
(73) Patentinhaber: Durst Austria GmbH, 9900 Lienz (AT)
(72) Erfinder: GRIEßER, Thomas, 8792 Sankt Peter Freienstein (AT); EDLER, Matthias, 8111 Gratwein-Straßengel (AT); MOSTEGEL, Florian, 8010 Graz (AT); ROTH, Meinhart, 8010 Graz (AT); SAMUSJEW, Aleksandra, 1060 Wien (AT); ÖSTERREICHER, Andreas, 8700 Leoben (AT); BILLIANI, Janine, 8010 Graz (AT); PIOCK, Richard, 39031 Bruneck (IT); LENZ, Sebastian, 9911 Thal-Asslin (AT)
(74) Vertreter: Kempkens, Anke
(86) Internationale Anmeldenummer: PCT/EP2016/001744
(87) Internationale Veröffentlichungsnummer: WO 2017/088942

(56) Entgegenhaltungen:
- EP-A1- 2 657 308
- DE-A1-102005 008 931
- DE-T2-602004 006 908
- JP-A- H06 248 198
- US-A1- 2003 159 607
- US-A1- 2008 132 600
- US-A1- 2010 104 979
- US-A1- 2014 099 449

## Beschreibung

Die vorliegende Erfindung bezieht sich auf das Gebiet der Tinten auf Wasserbasis, insbesondere der Tintenstrahldruck-Tinten und betrifft eine Hybridtinte auf Wasserbasis umfassend als Komponenten (a) Wasser, (b) ein UV-härtendes Oligo- und/oder Polymer mit ethylenisch ungesättigten funktionellen Gruppen, (c) ein Feuchthaltemittel, (d) einen radikalbildenden Photoinitiator, wobei die Hybridtinte weiter (e) ein thermisch-härtendes Oligo- und/oder Polymer mit komplementären funktionellen Gruppen umfasst.

Weiterhin betrifft die Erfindung ein Verfahren zur Herstellung eines mit der erfindungsgemässen Hybridtinte gedruckten Artikels.

An dieser Stelle sollen vorab einige in diesem Dokument verwendete Begriffe definiert werden:
Wenn im Rahmen dieser Beschreibung von einem Oligomer gesprochen wird, so ist damit ein Molekül mit einer Molekülmasse im Bereich zwischen einschliesslich 1.000 und einschliesslich 10.000 zu verstehen. Wird hingegen im Rahmen dieser Beschreibung von einem Polymer gesprochen, so ist damit ein Molekül mit einer Molekülmasse grösser 10.000 zu verstehen.

Das Prozentzeichen "%" wird in der Beschreibung im Sinne von Gewichtsprozenten gebraucht.

Wenn im Rahmen dieser Beschreibung der Begriff "mit Wasser mischbar" verwendet wird, so ist damit gemeint, dass eine davon betroffene Komponente teilweise oder vollständig in Wasser löslich ist. Wird hingegen im Rahmen dieser Beschreibung der Begriff "in Wasser dispergierbar" benutzt, so ist damit gemeint, dass eine davon betroffene Komponente in Wasser nicht oder kaum löslich ist.

Wird im Rahmen dieser Beschreibung von einer "Komponente" gesprochen, so ist darunter die Reinkomponente gemeint.

Tinten auf Wasserbasis mit UV-härtenden Harzen und Acrylatmonomeren sind in der Druckindustrie ein zunehmend diskutiertes Thema. Derartige Tinten ermöglichen es gegenüber den üblichen UV-Tinten auf Acrylatbasis, die zu einem Grossteil aus einem oder mehreren Monomeren bestehen, dünnere gehärtete Tintenfilme auf ein Substrat zu realisieren, wodurch teures Acrylatmonomer als Ausgangsmaterial eingespart werden kann.

Die EP1036831 A1 offenbart beispielsweise eine derartige Tinte auf Wasserbasis mit einem UV-härtenden Harz und einem Acrylatmonomer, die in einem Tintenstrahldrucker zum Einsatz kommt. Diese Tinte umfasst ein Urethanoligomer, ein Monomer mit einer tri- oder höherfunktionellen reaktiven Gruppe, einen Fotopolymerisationsstarter, ein Farbmittel und ein wässriges Lösungsmittel, wobei das Monomer ein Acrylatmonomer auf Basis von Trimethylolpropan, Pentaerythritol oder Dipentaerythritol ist.

Darüber hinaus offenbart dieses Dokument in den angeführten Beispielen ein Aufzeichnungsverfahren, bei dem in einem ersten Schritt Tröpfchen dieser Tinte auf ein Substrat gedruckt werden. In einem zweiten Schritt werden die Tröpfchen bei einer bestimmten Temperatur getrocknet, um das wässrige Lösungsmittel zu entfernen und anschliessend in einem dritten Schritt werden die Tröpfchen mit UV-Licht bestrahlt, um die UV-Komponenten der Tinte zu härten.

Ausserdem offenbart dieses Dokument in der Beschreibung ein Aufzeichnungsverfahren, bei dem in einem ersten Schritt Tröpfchen dieser Tinte auf ein Substrat gedruckt werden. In einem zweiten Schritt werden die Tröpfchen mit UV-Licht bestrahlt, um die UV-Komponenten der Tinte zu härten und in einem dritten Schritt werden die Tröpfchen bei einer bestimmten Temperatur getrocknet, um das wässrige Lösungsmittel zu entfernen.

Die WO2013034880A2 beschreibt eine ähnliche Tinte auf Wasserbasis umfassend die Komponenten i) Polyurethan mit ethylenisch ungesättigten Gruppen, ii) ein wasserlösliches Triacrylat, iii) ein Farbmittel, iv) eine Flüssigkeit umfassend Wasser und ein organisches Lösungsmittel, v) optional einen Photoinitiator, vi) optional ein Tensid, wobei der Anteil der Komponente iv) grösser ist als die restlichen Komponenten der Tinte zusammen. Darüber hinaus offenbart das Dokument ein Verfahren zum Bedrucken eines Substrats mit dieser Tinte, wobei in einem ersten Schritt die Tinte getrocknet wird und in einem zweiten Schritt mit UV-Licht bestrahlt, um die UV-Komponenten der Tinte zu härten.

Die DE602004006908T2 beschreibt eine Tinte auf Wasserbasis für eine Tintenstrahlaufzeichnung umfassend Wasser, ein mit Wasser mischbares Harz; und ein wasserlösliches UV-härtbares Befeuchtungsmittel, das aus einem Polyalkylenglycolacrylat, Polyetheracrylat, einem hoch ethoxylierten Derivat von Acrylat, Polyethylenglycoldiacrylat, Polyethertriacrylat, ethoxyliertem Trimethylolpropantriacrylat oder irgendeiner Kombination derselben ausgewählt ist. Verfahrungsgemäss werden derartige Tinten in einem ersten Schritt auf ein zu bedruckendes Substrat aufgetragen, in einem zweiten Schritt erwärmt, um das Wasser zu entfernen und in einem dritten Schritt mit UV-Strahlung gehärtet.

Insbesondere offenbart DE602004006908T2 in Beispiel Nr.3 eine Tintenstrahldrucktinte umfassend (a) deionisiertes Wasser, (b) NeiRad R-441 als ein UV-härtbares Harz, (c) Polyethylenglycol-400-Diacrylat als UV-härtbares Feuchthaltemittel und (d) Irgacure 2959 als radikalbildenden Photoinitiator.

Die EP 1 792 956 B1 offenbart eine durch Bestrahlung mit Elektronenstrahlen härtbare Zusammensetzung auf Wasserbasis umfassend: i) Wasser, ii) ein ethylenisch ungesättigtes Oligomer, iii) ein wasserlösliches ethylenisch ungesättigtes Harz, das neutralisierte saure oder basische funktionelle Gruppen enthält, welches ein oberflächenaktives Material ist, das chemisch hydrophile und hydrophobe Strukturen eingliedert; wobei die resultierende Zusammensetzung eine einphasige Lösung ist, die keinen Photoinitiator enthält.

Die EP 2 703 459 B1 offenbart ein Verfahren zum Bilden eines Druckwerks, wobei das Verfahren folgende Schritte umfasst: i) Bereitstellen einer lichthärtenden Tintenzusammensetzung, die ein Farbmittel, Wasser, einen Photoinitiator, eine UV-härtende Polyurethandispersion, ein hydrophob strahlungshärtendes Monomer und ein wasserlösliches oder wassermischbares strahlungshärtendes Monomer enthält; ii) Bereitstellen eines Mediensubstrats; iii) Aufsprühen eines Strahls von Tröpfchen der lichthärtenden Tintenzusammensetzung auf das Mediensubstrat; iv) Pinning der Tintenstrahlzusammensetzung, sobald diese auf das Mediensubstrat gedruckt ist; v) Trocknen der Tintenzusammensetzung; vi) Anwenden von Lichtenergie auf die Tintenzusammensetzung, wobei die Lichtenergie einen Frequenz- und Energiepegel hat, der zum Härten der lichthärtenden Tintenzusammensetzung geeignet ist.

Die DE 10 2005 008931 A1 offenbart in Beispiel T2.1.1 eine Tintenstrahldrucktinte umfassend (a) destilliertes Wasser, (b) ein strahlungshärtbares Polyurethan, (c) ein Propylenglykol als Feuchthaltemittel sowie (d) Hydroxy-2-methylphenylpropanon als radikalbildenden Photoinitiator.

Die US 2010/104979 A1 offenbart in Beispiel Nr.83 eine in Wasser verdünnbare, UVhärtbare Formulierung umfassend, (a) Wasser, (b) Bayhydrol UV2282 als UV-härtendes Oligo- und/oder Polymer mit ethylenisch ungesättigten funktionellen Gruppen und (c) einen radikalbildenden Photoinitiator.

Die obigen Tinten auf Wasserbasis ermöglichen zwar die Realisierung von dünneren gehärteten Filmen. Allerdings liegt nach der Härtung derselben in der Regel noch ein Restanteil an nicht umgesetztem, d.h. nicht gehärtetem, Photoinitiator und/oder UV-härtendem Monomer und/oder UV-härtendem Oligo- und/oder Polymer vor.

Es wäre wünschenswert eine Tinte auf Wasserbasis zur Verfügung zu haben, die einerseits sich die Vorteile der oben genannten Tinten zu nutze macht und andererseits darüber hinaus mit der Tintenfilme realisiert werden können, die nach deren Härtung einen zumindest geringeren Restanteil an zumindest einer nicht umgesetzten UV-härtenden Komponente aufweist.

Die Aufgabe der vorliegenden Erfindung besteht nun darin das Problem an der Wurzel zu packen, indem eine Hybridtinte auf Wasserbasis bereitgestellt wird, die gegenüber den im Stand der Technik bekannten Tinten auf Wasserbasis in ihrer Komposition einen geringeren UV-härtenden Anteil aufweist.

Die Aufgabe wird durch die Bereitstellung einer Hybridtinte auf Wasserbasis gemäß dem unabhängigen Anspruch 1 erfüllt, welche als Komponenten (a) Wasser, (b) ein UV-härtendes Oligo- und/oder Polymer mit ethylenisch ungesättigten funktionellen Gruppen, (c) ein Feuchthaltemittel, (d) einen radikalbildenden Photoinitiator umfasst, wobei die Hybridtinte eine Tintenstrahldrucktinte ist. Erfindungsgemäss umfasst die Hybridtinte weiter (e) ein thermisch-härtendes Oligo- und/oder Polymer mit komplementären funktionellen Gruppen, das so ausgebildet ist, dass es unter thermischer Einwirkung selbstvernetzend ist, wobei die komplementären funktionellen Gruppen ausgebildet sind untereinander Polyadditions- oder Polykondensationsreaktionen eingehen zu können.

Die Unteransprüche beschreiben bevorzugte Varianten des erfinderischen Verfahrens.

Erfindungsgemäss ermöglicht die Zugabe des thermisch-härtenden Oligo- und/oder Polymers mit komplementären funktionellen Gruppen den UV-härtenden Anteil einer Tinte zurückzufahren, sodass beim Verarbeitungsprozess die UV-Härtung für die Hybridtinte keine so große Rolle mehr spielt.

Eine bevorzugte Ausgestaltung der erfindungsgemässen Hybridtinte umfasst als weitere Komponente (f) ein vernetzendes Monomer mit mindestens zwei ethylenisch ungesättigten funktionellen Gruppen, vorzugsweise mindestens drei.

Hybridtinten gemäß einigen Ausführungsformen der vorliegenden Erfindung können einen kleineren Anteil am radikalbildenden Photoinitiator im Vergleich zu einer ähnlichen Tinte auf Wasserbasis ohne thermisch-härtende Komponente enthalten. Die Reduktion dieses Anteils kann Hand in Hand gehen mit der Reduktion des Anteils am Monomer und/oder des Anteils am UV-härtendem Oligo- und/oder Polymer. Das macht die erfindungsgemässe Hybridtinte umweltfreundlicher und für den Lebensmittelverpackungsdruck besonders interessant, da hier zunehmend strengere behördliche Vorschriften eingehalten werden müssen.

Beispielsweise darf gemäß der Verordnung (EG) Nr. 2023/2206 der Kommission vom 22.Dezember 2006 eine bedruckte Fläche nicht direkt mit Lebensmitteln in Berührung kommen, wobei zusätzlich die Druckfarbenbestandteile ins Lebensmittel nicht in Konzentrationen übergehen dürfen, die zu Substanzwerten in dem betreffenden Lebensmittel führen, die nicht mit den Anforderungen von Artikel 3 der Verordnung (EG) Nr. 1935/2004 in Einklang stehen.

Bekanntlich gehört nun aber eine Vielzahl der käuflichen radikalbildenden Photoinitiatoren neben den in der Regel naturgemäß migrationsfreudigen Monomeren genau zu den oben genannten Druckfarbenbestandteilen, die aus dem Verpackungsmaterial ins Lebensmittel gelangen können, sodass es oft zu einer Kontamination des verpackten Lebensmittels kommt. Der Übergang dieser Bestandteile kann auf zweierlei Wegen erfolgen:
Erstens, die Kontamination erfolgt durch Migration der Druckfarbenbestandteile von der Druckfarbe durch das Trägermaterial hindurch (indirekte Weg) und/oder zweitens infolge eines Abklatschens im Stapel- oder im Rollenwickel-verpackungsmaterial (direkter Weg), sodass diese Bestandteile wieder auf die dem Lebensmittel zugewandten Seite des Verpackungsmaterials gelangen.

Für Direktverpackungen, bei denen Lebensmittel, insbesondere flüssige Lebensmittel wie beispielsweise Milch, direkt mit der Innenwand des Verpackungsmaterials in Berührung kommen, ist die Wahl der Drucktinte mit besonderer Sorgfalt zu wählen, damit die gesetzlichen Bestimmungen eingehalten werden können. Dies gilt insbesondere für jene Fälle, wo die Verpackung eine nicht immer ausreichend wirksame Barriere für migrierende UV-Tintenbestandteile ist.

Obwohl die Druckfarbenbestandteile oft nur in Konzentrationen in Lebensmittel übergehen, die im ppb Bereich liegen, kann dadurch bereits die gesetzlich zugelassene Konzentration überschritten und die menschliche Gesundheit gefährdet werden.

Mit Hybridtinten gemäß einigen Ausführungsformen der vorliegenden Erfindung kann nun das Risiko einer Kontamination durch UV-Komponenten zumindest teilweise verringert werden. Das wiederum erhöht die Lebensmittelqualität und letzten Endes die Konsumentensicherheit.

Neben dem vorteilhaften gesundheitlichen Aspekt hat sich ausserdem gezeigt, dass die erfindungsgemässen Hybridtinten gemäss einigen Ausführungsformen eine ähnliche oder höhere Lagerstabilität im Vergleich zu den bisher bekannten Tinten auf Wasserbasis aufweisen.

Hybridtinten gemäß einigen Ausführungsformen können ausserdem eine ähnliche oder höhere "Open Time" wie die bisher verwendeten Tinten auf Wasserbasis aufweisen. Mit "Open Time" bezeichnet man jenen Zeitintervall zwischen zwei Druckaufgaben, während dessen kein Drucken stattfindet und nach dessen noch alle Düsen einwandfrei funktionieren. Einwandfrei bedeutet hier, dass die betroffenen Düsen durch die Tinte keine Verstopfung oder Teilverstopfung erleidet haben und auf Grund dessen kein Purge-Schritt erforderlich ist, der Zeit kosten würde. In dem sogenannten "Purge-Schritt" werden alle Düsen der Druckköpfe ein- oder mehrmals aktiviert, um diese sicher freizuspülen.

Wie oben beschrieben, umfasst die erfinderische Hybridtinte mehrere Komponenten, auf welche an dieser Stelle näher eingegangen wird.

Wasser (Komponente (a)) dient als Trägervehikel und/oder als Lösungsmittel für die übrigen Tintenkomponenten. Das Wasser kann reines Wasser sein, welches beispielsweise durch einen Ionenaustauscher oder Ultrafiltration oder Umkehrosmose erhalten wurde. Die Gesamtmenge an Wasser errechnet sich aus der Summe der direkt zugesetzten Menge an Wasser als Komponente (a) und der indirekt zugesetzten Menge aus den jeweiligen Produkten, die die übrigen Komponenten enthalten können.

Die Gesamtmenge an Wasser variiert zwischen 20 und 70 % und nimmt einen Anteil an der Tinte von bevorzugt >40%, besonders bevorzugt > 50% ein.

Das UV-härtende Oligo- und/oder Polymer mit ethylenisch ungesättigten funktionellen Gruppen (Komponente (b)) besitzt mehrere radikalisch polymerisierbare Gruppen, die unter Einwirkung von UV-Strahlung Vernetzungsreaktionen eingehen, wobei in der Regel ein radilkalbildender Photoinitiator die Vernetzungsreaktion initiiert.

Diese Komponente ist in Wasser dispergierbar oder mit Wasser mischbar. Geeignete Komponenten (b) sind beispielsweise in den Produkten Alberding LUX 399 oder Bayhydrol UV XP 2775 enthalten.

In einer besonders bevorzugten Ausgestaltung der Hybridtinte ist das UV-härtende Oligo- und/oder Polymer mit ethylenisch ungesättigten funktionellen Gruppen ein Oligo- und/oder Polyurethanacrylat.

Gemäss einer bevorzugten Ausführungsform der vorliegenden Erfindung liegt die Komponente (b) in der Hybridtinte als dispergierte Partikel mit einer Partikelgrössenverteilung von
i) d(0,99) < 3,0 µm, bevorzugt < 2,0 µm, und
ii) d(0,9) < 1,6 µm, bevorzugt < 0,8 µm, insbesondere < 0,4 µm und
iii) d(0,5) < 1,0 µm, bevorzugt < 0,5 µm, insbesondere < 0,25 µm vor.

In einer weiteren bevorzugten Ausführungsform der vorliegenden Erfindung beträgt die Menge an UV-härtenden Oligo- und/oder Polymer in der Tinte 2 % bis 40 %, vorzugsweise zwischen 5 und 25 %.

Das Feuchthaltemittel (Komponente (c)) verhindert das rasche Eintrocknen der Tinte, insbesondere an Düsenöffnungen von Druckköpfen eines Tintenstrahldruckers. Das Feuchthaltemittel ist vorzugsweise irgendeine wasserlösliche organische Verbindung mit einem Siedepunkt von vorzugsweise über 160 °C, besonders bevorzugt über 170 °C. Geeignete Feuchthaltemittel für die Hybridtinte sind beispielsweise Ethylenglykole, Glycerin, 1,6-Hexandiol, Propylenglykol, Pyrrolidin-2-on, 1,5-Pentandiol, 2-Methyl-1,3-Propandiol, Polyethylenglykol (PEG 200, PEG 400), Dipropylenglykol, Tripropylenglykol, Glykolether wie beispielsweise Dipropylenglykolmonomethylether, Dipropylenglykolmonopropylether, Dipropylenglykolmonobutylether.

In einer bevorzugten Ausführungsform der Erfindung beträgt die Menge an Feuchthaltemittel in der Tinte 2 bis 40%, vorzugsweise zwischen 5 und 30%.

In einer weiteren bevorzugten Ausführungsform umfasst das Feuchthaltemittel mindestens zwei wasserlösliche organische Verbindungen mit einem Siedepunkt von vorzugsweise über 160 °C, besonders bevorzugt über 170 °C.

Gemäss einer anderen bevorzugten Ausgestaltung der vorliegenden Erfindung ist das Feuchthaltemittel ein UV-härtendes Feuchthaltemittel, welches jeweils eine oder mehrere UV-härtende ethylenisch ungesättigte Gruppen aufweist.

Gemäss einer weiteren bevorzugten Ausgestaltung der vorliegenden Erfindung ist das Feuchthaltemittel ein thermisch-härtendes Feuchthaltemittel, welches jeweils eine oder mehrere thermisch-härtende komplementäre funktionelle Gruppen aufweist.

Ein Feuchthaltemittel kann genauso aus Mischungen aus zumindest einem nichthärtenden und zumindest einem UV- oder thermisch-härtenden Feuchthaltemittel bestehen.

Der radikalbildende Photoinitiator (Komponente (d)) dient dazu die Polymerisationsreaktion zu initiieren.

Geeignete Photoinitiatoren sind beispielsweise Phenylhydroxyketone wie beispielsweise 4-(2-Hydroxyethoxy)phenyl(2-hydroxy-2-methylpropyl)keton, Thioxanthone wie beispielsweise Isopropylthioxanthon, Benzophenone (4-4'Bisdiethylamino-benzophenon), Alkylbenzophenone, halogenierte Benzophenone (4-Chlorbenzophenon, 4,4'-Dichlorbenzophenon), Anthraquinone, Anthrone (9(10*H*)-Anthracenon), Benzoin, Benzil und Benzil-Derivate, wie beispielsweise Benzildimethylketal, Phosphinoxide oder Phosphinsulfide, wie beispielsweise Bisacylphosphinoxid und 2,4,6-Trimethylbenzoyldiphenylphosphineoxid sein. Weitere geeignete und kommerziell verfügbare Photinitiatoren sind beispielsweise Irgacure 2959, Irgacure 819DW, Irgacure TPO-L, Irgacure 184, Irgacure 907, Irgacure 500, Irgacure 127, Irgacure 1173 (alle BASF), APi-180 (Shenzhen UV-ChemTech), Q-BPQ (3B Scientific).

Gemäss einigen Ausführungsformen der vorliegenden Erfindung beträgt die Menge am radikalbildenden Photoinitiator in der Tinte 0,1bis 5%, vorzugsweise zwischen 0,5 und 3,0%.

Das thermisch-härtende Oligo- und/oder Polymer mit komplementären funktionellen Gruppen (Komponente (e)) geht unter ausreichender thermischer Einwirkung Vernetzungsreaktionen ein. Dabei nehmen die komplementären funktionellen Gruppen an der thermischen Vernetzungsreaktion teil.

Wenn im Rahmen dieser Beschreibung von einer komplementären funktionellen Gruppe gesprochen wird, so ist darunter eine reaktive funktionelle Gruppe zu verstehen, die eine Polyadditions- oder Polykondensationsreaktion eingehen kann. Indessen ist darunter nicht eine reaktive funktionelle Gruppe zu verstehen, bei der eine homolytische Spaltung durch UV-Bestrahlung erfolgt, um in Folge dessen eine Vernetzungsreaktion eingehen zu können.

Das oder die betroffenen thermisch-härtenden Oligo- und/oder Polymere sind unter thermischer Einwirkung selbstvernetzend und/oder fremdvernetzend.

Diese Oligo- und/oder Polymere können beispielsweise Carbamat- und/oder Allophanat- und/oder Isocyanatgruppen und/oder zu den vorgenannten Gruppen komplementäre reaktive funktionelle Gruppen im Molekül aufweisen. Geeignete reaktive funktionelle Gruppen sind beispielsweise isocyanatreaktive funktionelle Gruppen, wie Thiol-, Hydroxyl- und/oder primäre und/oder sekundäre Aminogruppen.

Ein geeignetes thermisch-härtendes Oligo- und/oder Polymer ist beispielsweise im Produkt Alberdingk^{®} AC 2523 enthalten.

In einer bevorzugten Ausgestaltung der Hybridtinte ist das thermisch-härtende Oligo- und/oder Polymer mit komplementären funktionellen Gruppen ein entsprechendes Acrylat und/oder ein Urethanacrylat.

Gemäss einer bevorzugten Ausführungsform der vorliegenden Erfindung liegt die Komponente (e) in der Hybridtinte als dispergierte Partikel mit einer Partikelgrössenverteilung von
i) d(0,99) < 3,0 µm, bevorzugt < 2,0 µm, und
ii) d(0,9) < 1,6 µm, bevorzugt < 0,8 µm, insbesondere < 0,4 µm und
iii) d(0,5) < 1,0 µm, bevorzugt < 0,5 µm, insbesondere < 0,25 µm vor.

In einer weiteren bevorzugten Ausgestaltung variiert die relative Menge an thermisch-härtendem Oligo- und/oder Polymer in der Tinte zwischen 2 und 30%, vorzugsweise zwischen 2 und 20%.

Der Hybridtinte kann, wie oben beschrieben, als Komponente (f) ein vernetzendes Monomer mit mindestens zwei ethylenisch ungesättigten funktionellen Gruppen, vorzugsweise zumindest drei, umfassen, welches als Vernetzungsmittel für das UV-härtende Oligo- und/oder Polymers mit ethylenisch ungesättigten funktionellen Gruppen dient.

Das Monomer ist vorzugsweise mit Wasser mischbar. Geeignete Monomere sind beispielsweise Alkoxylierte triacrylate, Glyceryltriacrylat, Trimethylolpropanetriacrylat, Pentaerythroltriacrylat oder Dipentaerythrolpolyacralat (mit mindestens drei Acrylfunktionelle Gruppen). Gemäss einigen Ausführungsformen der vorliegenden Erfindung beträgt die Menge am vernetzenden Monomer in der Tinte 0,1 bis 10%, vorzugsweise zwischen 0,1 und 6%.

Die Hybridtinte kann ein Farbmittel (Komponente (g)) umfassen. Das Farbmittel dient als farbgebende Komponente. Dieses kann ein anorganischer oder organischer Farbstoff sein. Weiter kann das Farbmittel ein anorganisches oder organisches Farbpigment sein. Die Hybridtinte kann als Farbmittel ein Farbstoff und/oder Farbpigment umfassen.

Wenn im Rahmen dieser Beschreibung von Farbstoffen gesprochen wird, so sind darunter mit Wasser mischbare Farbmittel gemeint. Hingegen wird im Rahmen dieser Beschreibung von Farbpigmente gesprochen, so sind darunter in Wasser dispergierbare Farbmittel gemeint. Als Farbmittel können auch Metall-Ligand Komplexe zum Einsatz kommen. Geeignete Farbmittel sind beispielsweise Farbmittel vom Unternehmen Clariant International AG wie beispielsweise HostaJet Black O-PT, HostaJet Cyan BG-PT, HostaJet Magenta E-PT, HostaJet Yellow 4G-PT.

Werden unlösliche Farbmittel als Komponente (g) eingesetzt, die als dispergierte Farbpigmente in der Hybridtinte vorliegen, gilt bevorzugt, dass die Partikel der entsprechenden Pigmente eine Partikelgrössenverteilung von
i) d(0,99) < 3,0 µm, bevorzugt < 2,0 µm, und
ii) d(0,9) < 1,6 µm, bevorzugt < 0,8 µm, insbesondere < 0,4 µm und
iii) d(0,5) < 1,0 µm, bevorzugt < 0,5 µm, insbesondere < 0,25 µm aufweisen.

Gemäss einigen Ausführungsformen der vorliegenden Erfindung beträgt die relative Menge am Farbmittel in der Tinte zwischen 1 bis 10%, vorzugsweise zwischen 1 und 6%.

Der Tinte kann zusätzlich ein Gleit-und/oder Verlaufsadditiv (Komponente (h)) beigemengt werden, welches oder welche dazu dienen die Oberflächenspannung der Hybridtinte zu reduzieren. Geeignete Gleit-und/oder Verlaufsadditive sind beispielsweise Byk347, Byk333 oder TegoTwin4100.

Gemäss einigen Ausführungsformen der vorliegenden Erfindung beträgt die relative Menge an Gleit-und/oder Verlaufsadditiv in der Tinte zwischen 0,01% bis 5%, bevorzugt zwischen 0,05 und 2,0%.

Ein Dispergieradditiv kann zur Hybridtinte dazugegeben werden. Das Dispergiermittel (Komponente (i)) fördert wie bekannt die Benetzung und Stabilisierung von unlöslichen Partikeln und verhindert so das Auf- und Ausschwimmen sowie das Absetzen der jeweils vorhandenen Partikel, wodurch beispielsweise im Falle von Farbpartikeln eine hohe Konstanz von Farbort und Farbstärke bei Lagerung oder Zirkulation erhalten bleibt.

Der Tinte kann ein Entschäumer (Komponente (j)) beigemengt werden, der die Funktion hat sowohl die Schaumbildung zu verhindern als auch bereits gebildeten Schaum zu zerstören.

Als Entschäumer können beispielsweise Siloxane zum Einsatz kommen. Siloxanfreie Entschäumer können ebenfalls benutzt werden.

Die Hybridtinte kann eine Tintenstrahldrucktinte sein. Bei einer Tintenstrahldrucktinte gilt bevorzugt, dass diese eine Viskosität in einem Bereich zwischen etwa 3 bis etwa 20 mPa·s bei einer Temperatur zwischen 20 und 50 °C aufweist.

In einer besonders bevorzugten Ausgestaltung wird die Hybridtinte als Hybridtinte umfassend

| | | | |
|---|---|---|---|
| (a) | 20 bis 70 %, | bevorzugt 40 bis 70 % | Komponente (a), |
| (b) | 02 % bis 40 %, | bevorzugt 05 bis 25 % | Komponente (b), |
| (c) | 02 bis 40 %, | bevorzugt 05 bis 30 % | Komponente (c), |
| (d) | 0,1 bis 05 %, | bevorzugt 0,5 bis 3,0 % | Komponente (d), |
| (e) | 02 bis 30 %, | bevorzugt 02 bis 20% | Komponente (e), |

und optional zumindest einer der Komponenten:

| | | | |
|---|---|---|---|
| (f) | 0,1 bis 10 %, | bevorzugt 0,1 bis 06 % | Komponente (f), |
| (g) | 01 bis 10 %, | bevorzugt 01 bis 06 % | Komponente (g), |
| (h) | 0,01 bis 05 %, | bevorzugt 0,05 bis 2,0 % | Komponente (h), |

bereitgestellt,
wobei die Gesamtwasser-Menge in der Tinte >50% beträgt.

Die Komponenten (b) und (e) der Hybridtinte können auch als Einzelkomponente (z) vorliegen, dergestalt, dass das entsprechende Oligo- und/oder Polymer sowohl mit UV-härtenden ethylenisch ungesättigte Gruppen als auch mit thermisch-härtenden komplementären funktionellen Gruppen ausgestattet ist.

Gemäss einer bevorzugten Ausführungsform der vorliegenden Erfindung liegt die Komponente (z) in der Hybridtinte als dispergierte Partikel mit einer Partikelgrössenverteilung von
i) d(0,99) < 3,0 µm, bevorzugt < 2,0 µm, und
ii) d(0,9) < 1,6 µm, bevorzugt < 0,8 µm, insbesondere < 0,4 µm und
iii) d(0,5) < 1,0 µm, bevorzugt < 0,5 µm, insbesondere < 0,25 µm vor.

In einer weiteren bevorzugten Ausgestaltung variiert die relative Menge an der Komponente (z) in der Tinte zwischen 2 und 40%.

Die Hybridtinte kann zusätzlich zumindest eine weitere Komponente (b) und/oder zumindest eine weitere Komponente (e) und/oder zumindest eine weitere Einzelkomponente (z) umfassen.

In einer besonders bevorzugten Ausgestaltung umfasst die Hybridtinte weiter (I) ein vernetzendes Monomer mit mindestens zwei komplementären funktionellen Gruppen, vorzugsweise mindestens drei.

Zur Herstellung eines gewünschten Artikels mit der Hybridtinte kann das erfindungsgemässe Verfahren angewendet werden, welches folgende Schritte umfasst:
a) bereitstellen eines Substrats,
b) bereitstellen einer erfindungsgemässen Hybridtinte auf Wasserbasis,
c) auftragen von Tropfen der Hybridtinte auf das Substrat,
d) zumindest teilweise Härten der UV-härtenden Komponente in den Tropfen unter Verwendung einer UV-Strahlungsquelle,
   wobei in einem Schritt
e) ein zumindest teilweise Härten der thermisch-härtenden Komponente in den Tropfen unter Verwendung einer NIR und/oder IR -Strahlungsquelle erfolgt, wobei in Schritt e) Wasser und Feuchthaltemittel zumindest teilweise mit entfernt werden.

Die Unteransprüche beschreiben bevorzugte Varianten des erfinderischen Verfahrens.

Im Unterschied zu den im Stand der Technik bekannten Tinten auf Wasserbasis, die nur mit UV-Licht härtbar sind, erfolgt die Härtung der vorliegenden Hybridtinte in zwei Schritten, die zwei unterschiedlichen Härungsmechanismen zugrunde liegen, nämlich der UV-Härtung und der thermischen Härtung.

Die Reihenfolge des UV-Härtungs-Schrittes und des thermischen-Härtungs-Schrittes kann unerheblich sein, wenn es lediglich einzig und allein um die Erreichung bestimmter Haftungskennwerte und Kratzfestigkeitskennwerte eines auf einem Substrat aufgetragenen Tintenfilms geht.

Es hat sich gezeigt, dass bei Hybridtinten gemäß einigen bevorzugten Ausführungen unabhängig von der Reihenfolge der Härtungsschritte ähnliche bzw. geringfügig voneinander abweichende Ergebnisse bei Haftung und Kratzfestigkeit eines auf einem Substrat aufgebrachten Tintenfilms erzielt werden konnten.

Für das Gesamtergebnis eines auf ein Substrat mit der Hybridtinte mittels eines Tintenstrahldruckers gedruckten Druckbildes ist die Reihenfolge jedoch sehr wohl entscheidend.

Der Fachmann hat in diesem Zusammenhang dabei zu beachten, dass unterschiedliche Faktoren das Gesamtergebnis, insbesondere die Qualität des erhaltenen Druckbildes, der auf ein Substrat gefertigt wird, beeinflussen. Hierzu gehören unter anderem die Tinten-Farbe und die Zeit in der die auf dem Substrat aufgebrachte Tinte einer UV- und NIR und/oder IR-Strahlungsquelle bei einer vorbestimmten Intensität ausgesetzt wird.

Es ist allgemein bekannt, dass sich schwarze Substrate bei Sonneneinstrahlung wesentlich stärker aufheizen als weiße. Die Ursache liegt unter anderem in der Wechselwirkung des betroffenen Substrats mit der nahen Infrarotstrahlung (NIR), die sich jedoch nicht ausschließlich auf die Absorption der elektromagnetische Strahlung beschränkt, bei der die elektromagnetischen Wellen in Wärme umgewandelt werden, sondern auch auf die Wärmestrahlung der Oberfläche, also der Emission im fernen Infrarot.

Wird nun im erfindungsgemässen Verfahren ein mit einer Hybridtinte bedrucktes Substrat einer NIR-Strahlung ausgesetzt, so erfolgt die Bestrahlung in der Regel frontseitig auf das bedruckte Substrat, d.h. es erfolgt eine direkte Bestrahlung der Tinte. Die Frontseite ist dabei die mit der Tinte bedruckte Seite des Substrats, welche auf die Strahlungsquelle blickt und hin zur Strahlungsquelle den kürzesten Weg aufweist.

Die frontseitige Bestrahlung der Hybridtinte entfaltet naturgemäss die grösste Wirkung, da sie ohne Zwischenbarriere und somit verlustfrei auf die Tinte trifft. Dadurch ist es möglich die Hybridtinte auf dem Substrat innerhalb einer relativ kurzen Zeitspanne thermisch zu behandeln. Erfolgt die Bestrahlung hingegen von der Rückseite eines Substrats, so gelangt abhängig von der Substratstärke entweder nur ein Bruchteil der ursprünglichen Strahlungsintensität oder überhaupt keine Strahlung bis in die Hybridtinte. Bekanntlich geht die Schwächung der Strahlungsintensität unter anderem in Abhängigkeit der Dicke des Materials einher.

Das erfindungsgemässe Verfahren ermöglicht somit eine Vielzahl an Artikeln herzustellen, da die thermische Härtung frontseitig erfolgt, sodass die Stärke bzw. Dicke des Substrat keine Rolle spielt. Geeignete Substrate sind beispielsweise Kartonagen, Aluminium, Kunststoffplatten, Holzplatten, MDF-Platten, Verpackungsmaterialien, Plastikfolien.

Hingegen ist Vorsicht geboten, wenn hitzeempfindliche Substrate zum Einsatz kommen. Wie oben dargelegt erhitzen sich Druckfarben mit dunklen Farbtönen rascher als hellere Farbtöne, sodass in solchen Fällen die Zeitspanne als auch die Intensität der NIR und/oder IR-Strahlung so gewählt werden soll, dass das Substrat keine Schäden davon trägt. Eine Überhitzung kann zu einer unerwünschten oder gar irreversiblen Ausdehnung und somit Verzerrung des Druckbildes führen. Schlimmstenfalls kann die unkontrollierte Bestrahlung dazu führen, dass das Substrat Feuer fängt.

Bei der Durchführung der thermischen Härtung gemäss Schritt e) hat der Fachmann somit stets darauf zu achten, dass die gewählte Zeit und Intensität der NIR-Strahlung auf das zu bedruckende Substrat und gegebenenfalls unter Berücksichtigung der einzusetzenden Tinten-Farben im Voraus abzustimmen ist, um diesen Schritt zeitlich so rasch wie möglich und unter Einhaltung der gewünschten Qualität, jedoch ohne Folgeschäden für das Substrat und Druckbild durchführen zu können.

Soll nun eine hohe Druckqualität mit dem erfindungsgemässen Verfahren erreicht werden, so gilt bevorzugt, dass die Härtungsschritte c) und d) der alphabetischen Reihenfolge nach durchgeführt werden. Die UV-Härtung der UV-härtenden Komponente oder Komponenten im ersten Härungsschritt ermöglicht ein instantanes Pinnen der Tropfen, der bevorzugt unmittelbar nach dem Druckvorgang gemäss Schritt b) erfolgt, wodurch ein Auseinanderlaufen bzw. Zusammenziehen der Tropfen zumindest teilweise reduziert oder gestoppt wird, welches durch die zumindest teilweise Vernetzung der UV-härtenden Komponenten bewirkt wird. Anschliessend erfolgt im zweiten Härtungsschritt die thermische-Härtung der thermisch-härtenden Komponente(n), wodurch es zu einer Vernetzung der thermisch härtenden Komponente oder Komponenten kommt. Wasser und Feuchthaltemittel werden in diesem Schritt zumindest teilweise mit entfernt.

Erfolgt hingegen der thermische Härtungsschritt d) vor dem UV-Härtungsschritt c), so wurde beobachtet, dass die wunschgemäss hohe Druckqualität nicht immer erreicht werden konnte.

Obwohl sich die Erfinder nicht auf eine einzige Erklärung oder Theorie festlegen wollen, wird angenommen, dass durch die Umkehrung der alphabetischen Reihenfolge der Härtungsschritte eine hohe Druckqualität nicht immer erreicht werden kann, da die Zeitspanne, in der die Tropfen der NIR- und/oder IR-Strahlung ausgesetzt werden muss, um den thermisch-härtenden Anteil der Tinte bei der erforderlichen Temperatur auf unterschiedlichen Substratarten zu härten und das Wasser und das Feuchthaltemittel zumindest teilweise mit entfernen zu können, deutlich grösser ist als beim UV-Härtungsschritt, sodass sich infolge dessen in dieser längeren Zeit die Tropfen zu sehr ausbreiten oder zusammenziehen würden.

Bekanntlich weisen unterschiedliche Substrate unterschiedliche Oberflächenenergien auf, sodass diese von der Tinte unterschiedlich benetzt werden. Je grösser die Zeitspanne zwischen Auftrag und Härtung ist, desto stärker äußert sich dieser Effekt, sodass für unterschiedliche Substratarten es auch zu unterschiedlichen Glanzgraden kommen kann. Wird hingegen im ersten Schritt der UV-härtende Anteil der Tinte gepinnt, kann dieser unerwünschte Effekt zumindest teilweise reduziert werden.

Gemäss einer bevorzugten Ausführungsform des erfindungsgemässen Verfahrens erfolgt der Auftrag von Tropfen der Hybridtinte mittels eines Tintenstrahldruckers durch Bedrucken des Substrats durch Ausstoss von Tintentropfen aus einem Druckkopf.

Die Tropfen können ein Volumen in einem Bereich zwischen 5 und 40 Picoliter aufweisen.

Das Auftragen der Tropfen kann unter Ausbildung eines Tintenfilms erfolgen.

In einer bevorzugten Ausführungsform werden die Tropfen und/oder der ausgebildete Tintenfilm in Schritt d) einer UV-Strahlendosis in einem Bereich zwischen 50 bis 5000 mJ/cm², bevorzugt zwischen 100 und 1000 mJ/cm², besonders bevorzugt zwischen 100 und 500 mJ/cm² in ein vorbestimmtes Zeitintervall ausgesetzt und in Schritt e) einer NIR-und/oder IR-Strahlungsquelle mit einer der Hybridtinte und dem Substrat angepassten Strahlendosis in ein vorbestimmtes Zeitintervall ausgesetzt, welches bevorzugt in einem Bereich zwischen 10 und 300 Sekunden liegt.

Die UV-Härtung unter Verwendung der UV-Strahlungsquelle gemäß Schritt d) kann unmittelbar nach Schritt c) erfolgen.

In einer weiteren bevorzugten Ausführungsform wird in Schritt e) anstatt der NIR- und/oder IR-Strahlungsquelle oder ergänzend dazu Luft auf die Tinte unter Verwendung von Blasluftmittel geblasen. Diese Vorgehensweise ist vorteilhaft, da dadurch unter anderem eine die Tinte abdeckende isolierende Luftschicht rascher beseitigt werden kann. Wird das Blasluftmittel anstatt der NIR-und/oder IR-Strahlungsquelle verwendet, so weißt die Luft erfindungsgemass eine ausreichend hohe Temperatur auf, um in ein vorbestimmtes Zeitintervall in Schritt e) die zumindest teilweise Härtung der thermisch-härtenden Komponente oder Komponenten zu erreichen. Diese Temperatur liegt bevorzugt zwischen etwa 50 und etwa 90°C. Hingegen wird die Luft lediglich ergänzend benutzt, so kann diese auch eine Temperatur zwischen 15 und 90°C aufweisen.

Zur erfindungsgemässen Herstellung eines Artikels mit der Hybridtinte wird vorgeschlagen das Verfahren nach Anspruch 17 anzuwenden, welches folgende Schritte umfasst:
a) bereitstellen eines Substrats,
b) bereitstellen einer erfindungsgemässen Hybridtinte auf Wasserbasis,
c) auftragen von Tropfen der Hybridtinte auf das Substrat,
d) zumindest teilweises Härten der UV-härtenden Komponente in den Tropfen unter Verwendung einer UV-Strahlungsquelle,
   wobei in einem Schritt
e) ein zumindest teilweises Härten der thermisch-härtenden Komponente in den Tropfen unter Verwendung einer NIR und/oder IR -Strahlungsquelle und/oder eines Blasluftmittels erfolgt, wobei in Schritt e) Wasser und Feuchthaltemittel zumindest teilweise mit entfernt werden.

In einer bevorzugten Ausführungsform wird in Schritt e) mittels Blasluftmittel auf die Tropfen Luft geblasene, die eine Temperatur von etwa 15 bis etwa 90°C aufweist.

In einer besonders bevorzugten Ausführungsform weisen die realisierten Tintenfilme einen Haftungskennwert gemäss Gitterschnittprüfung DIN EN ISO 2409 von GT mindestens 1, vorzugsweise 0 und eine Kratzfestigkeitskennwert gemäss Bleistifthärte Wolff-Wilborn ISO 15184 von mindestens 3B auf.

In einer weiteren besonders bevorzugten Ausführungsform der vorliegenden Erfindung erfolgt der Auftrag der Tropfen mit einem Tintenstrahldrucker, der mit einem scannenden Druckmodul, welches eine UV-Strahlungsquelle umfasst, und mit einem Substratvorschub arbeitet, wodurch eine Scanrichtung des Druckmoduls und eine Vorschubrichtung des Substrats definiert werden, wobei Vorschubrichtung und Scanrichtung sich unterscheiden und wobei mit dem scannenden Druckmodul auf dem Substrat gepinnte Druckzeilen bereitgestellt werden, welche anschliessend mit einer NIR- und/oder IR-Strahlungsquelle und/oder einem Blasluftmittel thermisch zumindest teilweise gehärtet werden, wobei die NIR- und/oder IR-Strahlungsquelle und/oder das Blasluftmittel gegenüber dem scannenden Druckmodul in Vorschubrichtung des Substrats stromabwärts angeordnet wird oder werden.

Die NIR- und/oder IR-Strahlungsquelle und/oder einem Blasluftmittel kann oder können als scannende oder stationäre Einheit ausgebildet sein.

In einer anderen besonders bevorzugten Ausführungsform der vorliegenden Erfindung erfolgt der Auftrag der Tropfen mit einem Tintenstrahldrucker, der mit einem stationären Druckmodul und mit einem Medienvorschub arbeitet, wodurch eine Vorschubrichtung des Substrats definiert wird und wobei mit dem stationären Druckmodul im Schritt c) eine oder mehrere gedruckte Zeilen bereitgestellt werden, die mit einer UV-Strahlungsquelle in einem Schritt d) zumindest teilweise gehärtet wird oder werden, wobei die UV-Strahlungsquelle gegenüber dem stationären Druckmodul in Vorschubrichtung des Substrats stromabwärts angeordnet wird, und wobei in einem Schritt e) die zumindest teilweise UV-gehärtete Zeile oder Zeilen mit einer NIR und/oder IR-Strahlungsquelle und/oder einem Blasluftmittel zumindest teilweise gehärtet wird, welche NIR- und/oder IR-Strahlungsquelle und/oder welches Blasluftmittel gegenüber der UV-Strahlungsquelle in Vorschubrichtung des Substrats stromabwärts angeordnet wird oder werden.

In einer weiteren Variante des erfindungsgemässen Verfahrens erfolgt der thermische Schritt anstatt unter Verwendung einer NIR- und/oder IR-Strahlungsquelle unter Verwendung eines Heizofens. Alle oben geschilderten bevorzugten Ausführungsformen können hier genauso Anwendung finden, sofern diese nicht ausschließlich auf die NIR- und/oder IR-Härtung Anwendung finden.

Diese Aufgabe wird somit auch durch ein Verfahren zum Herstellen eines Artikels umfassend folgende Schritte realisiert:
a) bereitstellen eines zu bedruckenden Substrats
b) bereitstellen einer wasserbasierten erfindungsgemässen Hybridtinte
c) auftragen von Tintentropfen auf das zu bedruckende Substrat
d) zumindest teilweises Härten der UV-härtenden Komponenten in den Tintentropfen unter Verwendung einer UV-Strahlungsquelle,
   wobei in einem weiteren Schritt
e) ein zumindest teilweises Härten der thermisch-härtenden Komponente in den Tintentropfen unter Verwendung eines Heizofens erfolgt, wobei in Schritt e) Wasser und Feuchthaltemittel zumindest teilweise mit entfernt werden.

Im Unterschied zu einem der oben genannten erfindungsgemässen Verfahren, bei dem in Schritt e) ausschliesslich die NIR- und/oder IR-Strahlungsquelle zum Einsatz kommt, ist zu beachten, dass die teilweise Härtung der thermisch-härtenden Komponente der Tintentropfen unter Verwendung eines Heizofens in der Regel länger dauert, als wenn Schritt e) unter Verwendung einer NIR- und/oder IR-Strahlungsquelle erfolgt. Deshalb gilt bevorzugt, dass bei der Durchführung des erfindungsgemässen Verfahrens eine NIR- und/oder IR Strahlungsquelle zum Einsatz kommt.

In einer bevorzugten Ausführungsform werden die Tropfen und/oder der ausgebildete Tintenfilm in Schritt d) einer UV-Strahlendosis in einem Bereich zwischen 50 bis 5000 mJ/cm², bevorzugt zwischen 100 und 1000 mJ/cm², besonders bevorzugt zwischen 100 und 500 mJ/cm² in ein vorbestimmtes Zeitintervall ausgesetzt und in Schritt e) einer Wärme-quelle bei 50 bis 90°C für 20 bis 300 Sekunden ausgesetzt. Denkbar sind natürlich auch kürzere oder längere Trocknungszeiten, sofern zum einen eine ausreichende thermische Härtung und Trocknung gewährleitet ist und aber zum anderen bei längeren Trocknungszeiten keine Substratschäden die Folge sind.

In einer besonders bevorzugten Ausführungsform weisen die realisierten Tintenfilme, wie bei der NIR- und/oder IR-Härtung und Trocknung einen Haftungskennwert gemäss Gitterschnittprüfung DIN EN ISO 2409 von GT mindestens 1, vorzugsweise 0 und eine Kratzfestigkeitskennwert gemäss Bleistifthärte Wolff-Wilborn ISO 15184 von mindestens 3B auf.

Das folgende Versuchsbeispiel soll die Herstellung einer bevorzugten Ausführungsform der erfindungsgemäßen Tinte sowie die Durchführung eines bevorzugten erfindungsgemäßen Verfahrens zur Herstellung eines Artikels näher erläutern, ohne dass darin jedoch eine Einschränkung zu sehen ist.

### Beispielversuch 1:

### ❖ Herstellung einer bevorzugten Ausführungsform der Hybridtinte

Die Herstellung erfolgte für die in den Tabellen 1 und 2 auf Seite 22 und 23 angeführten Versuchstinten V1 bis V4 und V5 bis V8 nach den folgenden Schritten:
- Bereitstellen von getrennt vorliegenden Produkten einer zu mischenden Formulierung, wobei ein erstes Produkt als Komponente (a) Wasser umfasst, ein zweites Produkt als Komponente (b) ein UV-härtendes Oligo- und/oder Polymer mit ethylenisch ungesättigten funktionellen Gruppen umfasst, ein drittes Produkt als Komponente (c) ein Feuchthaltemittel umfasst, ein viertes Produkt als Komponente (d) ein radikalbildender Photoinitiator umfasst, ein fünftes Produkt als Komponente (e) ein thermisch-härtendes Oligo- und/oder Polymer mit komplementären funktionellen umfasst, ein sechstes Produkt als Komponente (f) ein vernetzendes Monomer mit mindestens zwei ethylenisch ungesättigten funktionellen Gruppen, vorzugsweise mindestens drei, umfasst und wobei ein siebtes Produkt als Komponente (g) ein Farbmittel umfasst,
- vor dem Bedrucken, mischen des ersten, zweiten, dritten, vierten, fünften, sechsten und siebten Produkts.
- vor dem Bedrucken eines Substrats, filtrieren der Tinte mit einem 5-6 µm Acro Last Chance Filter des Unternehmens Pall Corporation.

Eine Mastersizer-Untersuchung mit einem Partikelgrössenmessgerät hat ergeben, dass die Partikelgrössenverteilung der in der fertigen Hybridtinte vorliegenden Partikeln bei ca. d(0,5)= 0,25 µm und d(0,9)= 0,4 µm Durchmesser liegt.

### ❖ Herstellung der Artikel

Die Hybridtinten wurden auf ein Melinex-Substrat bei einer Nassfilmdicke von 12 µm aufgebracht. Anschliessend erfolgte die zumindest teilweise Härtung der UV-härtenden Komponenten in der aufgebrachten Tinte unter Verwendung einer UV-Strahlungsquelle durch Aussetzung derselben einer UV-Strahlendosis von 200 mJ/cm². In weiterer Folge erfolgte ein zumindest teilweises Härten der thermisch-härtenden Komponente der aufgebrachten Tinte unter Verwendung eines Heizofens (Ofen bei 70°C, 60 sec), wobei in diesem Schritt Wasser und Feuchthaltemittel zumindest teilweise mit entfernt wurden.

Untersucht wurden die Filmeigenschaften, nämlich Haftung und Kratzfestigkeit, der mit den jeweils bereitgestellten Hybridtinten hergestellten Tintenfilme auf den Melinex-Substraten.

### ❖ Ergebnisse der Untersuchung:

Die Untersuchung hat gezeigt, dass die mit dem erfindungsgemässen Verfahren hergestellten Tintenfilme einen Haftungskennwert gemäss Gitterschnittprüfung DIN EN ISO 2409 von GT 0 und einen Kratzfestigkeitskennwert gemäss Bleistifthärte Wolff-Wilborn ISO 15184 von mindestens 3B aufweisen. Die dadurch hergestellten Tintenfilme wurden unter Einhaltung der alphabetischen Reihenfolge der Verfahrensschritte (d) und (e) hergestellt.

### ❖ Ein durch Umdrehen der alphabetischen Reihenfolge der Härtungsschritte (d) und (e) hergestelltes Artikel

In einem Versuchsbeispiel wurde zum Zwecke des Vergleichs die alphabetische Reihenfolge der Verfahrensschritte (d) und (e) umgedreht, sodass im ersten Härtungsschritt die thermische-Härtung gemäss Schritte (e) unter Verwendung eines Heizofens (Ofen bei 70°C, 60 sec) und darauf folgend im zweiten Schritt die UV-Härtung gemäss Schritt (d) (Strahlendosis: 200 mJ/cm²) durchgeführt wurde. Für diesen Versuch wurde die Tintenformulierung V1 aus Tabelle T1 herangezogen.

Der dadurch hergestellte Tintenfilm hatte einen Haftungskennwert gemäss Gitterschnittprüfung DIN EN ISO 2409 von GT 0 und einen Kratzfestigkeitskennwert gemäss Bleistifthärte Wolff-Wilborn ISO 15184 von 2B.

**Tabelle 1:**

| Komponente | Produkt | V1 | V2 | V3 | V4 |
|---|---|---|---|---|---|
| | | Produkt-Anteil [%] | | | |
| (a) | Wasser deion. | 37,75 | 37,75 | 37,75 | 35,75 |
| (b)+(f) | PUD Bayhydrol UV XP 2775: | 18,00 | 18,00 | 18,00 | 18,00 |
| | **Komponente b:** Aliphatisches Urethanacrylat (ca. 40% in H₂O = **~7,2% der Hybridtinte))** | | | | |
| | **Komponente c:** Dipentaerytol Hexaacrylat (ca. 4% in H2O = **∼0,72 %)** | | | | |
| (c) | Propylenglykol | 20,00 | 20,00 | 20,00 | 20,00 |
| (d) | Irgacure^{®} 2959 | 0,50 | 0,50 | 0,50 | 0,50 |
| (d) | Irgacure^{®} 819 DW (>= 25.0 - < 50.0 % (aktive Komponente)) | 0,75 | 0,75 | 0,75 | 0,75 |
| (e) | Alberdingk^{®} AC 2523 | 12,00 | 12,00 | 12,00 | 12,00 |
| | **Komponente f** (Festanteil Harz: 47.0 - 49.0%) = **∼ 5,64 bis 5,88** % **an der Hybridtinte** | | | | |
| (9) | HostaJet Cyan BG-PT (ca. 20% in H₂O) | 10,00 | - | - | - |
| | **Komponente b = ca. 2,0% der Hybridtinte** | | | | |
| (g) | HostaJet Yellow 4G-PT (ca. 20% in H₂O) | - | 10,00 | - | - |
| (g) | HostaJet Black O-PT, (ca. 15% in H₂O) | - | - | 10,00 | - |
| (9) | HostaJet Magenta E-PT (ca. 20% in H₂O) | - | - | - | 12,00 |
| (h) | Byk 333 | 0,33 | 0,33 | 0,33 | 0,33 |
| (h) | Byk 347 | 0,67 | 0,67 | 0,67 | 0,67 |
| Gesamt | | 100 | 100 | 100 | 100 |
| Gesamt-Wassergehalt in der Hybridtinte (ungefähre Angabe) | | >50 | >50 | >50 | >50 |
| Viskosität [mPas] bei 25 Grad Celsius | | 5,4 | 5,4 | 5,2 | 5,3 |
| | | | | | |
| **Filmeigenschaften der hergestellten Artikel unter der Einhaltung der alphabetischen Reihenfolge der Härtungsschritte** | | | | | |
| Haftungskennwert gemäss Gitterschnittprüfung DIN EN ISO 2409 | | 0 | 0 | 0 | 0 |
| Kratzfestigkeitskennwert gemäss Bleistifthärte Wolff-Wilborn ISO 15184 | | 2B | B | 2B | 3B |

| | | | | | |
|---|---|---|---|---|---|
| Tabelle 2: | | | | | |

| Komponente | Produkt | V5 | V6 | V7 | V8 |
|---|---|---|---|---|---|
| | | **Produkt-Anteil [%]** | | | |
| (a) | Wasser deion. | 38,00 | 38,00 | 38,00 | 36,00 |
| (b)+(f) | PUD Bayhydrol UV XP 2775: | 18,00 | 18,00 | 18,00 | 18,00 |
| | **Komponente b:** Aliphatisches Urethanacrylat (ca. 40% in H₂O = 7,2%) | | | | |
| | **Komponente c:** Dipentaerytol Hexaacrylat (ca. 4% in H20 = **0,72 %)** | | | | |
| (c) | Propylenglykol | 18,00 | 18,00 | 18,00 | 18,00 |
| (c) | Sartomer SR415 (UV-härtendes Feuchthaltemittel) | 2,00 | 2,00 | 2,00 | 2,00 |
| (d) | Irgacure^{®} 2959 | 1,00 | 1,00 | 1,00 | 1,00 |
| (d) | Irgacure^{®} 819 DW (>= 25.0 - < 50.0 % (aktive Komponente)) | 0,50 | 0,50 | 0,50 | 0,50 |
| (e) | Alberdingk^{®} AC 2523 | 12,00 | 12,00 | 12,00 | 12,00 |
| | **Komponente f** (Festanteil Harz: 47.0 - 49.0%) **= ∼ 5,64 bis 5,88** % **an der Hybridtinte** | | | | |
| (9) | HostaJet Cyan BG-PT (ca. 20% in H₂O) | 10,00 | - | - | - |
| | **Komponente b = ca. 2,0% der Hybridtinte** | | | | |
| (g) | HostaJet Yellow 4G-PT (ca. 20% in H₂O) | - | 10,00 | - | - |
| (g) | HostaJet Black O-PT, (ca. 15% in H₂O) | - | - | 10,00 | - |
| (g) | HostaJet Magenta E-PT (ca. 20% in H₂O) | - | - | - | 12,00 |
| (h) | Tego Twin 4100 | 0,5 | 0,5 | 0,5 | 0,5 |
| Gesamt | | 100 | 100 | 100 | 100 |
| Gesamt-Wasser gehalt in der Hybridtinte (ungefähre Angabe) | | >50 | >50 | >50 | >50 |
| Viskosität [*mPas* ] bei 25 Grad Celsius | | 6,0 | 6,0 | 5,8 | 6,0 |
| | | | | | |
| **Filmeigenschaften der hergestellten Artik unter der Einhaltung der alphabetischen Reihenfolge der el Härtun gsschrit te** | | | | | |
| Haftungskennwe rt gemäss Gitterschnittprüfung DIN EN ISO 2409 | | 0 | 0 | 0 | 0 |
| Kratzfestigkeitsk ennwert gemäss Bleistifthärte Wolff-Wilborn ISO 15184 | | 3B | 2B | 3B | 3B |

An dieser Stelle sei erwähnt, dass entgegen der Erwartung der Erfinder, sich überraschenderweise gezeigt hat, dass eine UV-Nachhärtung des bereits mit dem erfindungsgemässen gehärteten Tintenfilms zu keiner bzw. zu keiner wesentlichen Verbesserungen der Filmeigenschaften, was Härtung und Kratzfestigkeit anbelangt, führt.

Die oben genannten Tintenformulierungen wurden im Rahmen der Untersuchung auf verschiedenen Substraten appliziert wie beispielsweise beschichtetes Papier, Aluminium und PVC. Eine Untersuchung hat gezeigt, dass zumindest für die angegebenen Substrate die Filmeigenschaften nahezu idente Farbechtheit mit einhergehender guter Abrieb- und Farbbeständigkeit aufweisen.

Eine Evaluierung der Hybridtinten hinsichtlich Ihrer Druckbarkeit wurde auf einer Drop Watcher Einheit (Dimatix Material Printer (DMP)-2831) durchgeführt. Der Fokus der Untersuchung lag dabei auf die Bestimmung der sogenannten Open-Time der Düsen eines Druckkopfes (Dimatix Materials Cartridges (DMC-11610)). Für die Druckversuche wurden die hergestellten Tintenformulierungen mit einem 5-6 µm Acro^{®} Last Chance Filter (LCF), ein in sich geschlossener Komplettfilter zur point-ofuse Filtration in Digitaldrucksysteme, vom Unternehmen Pall Corporation gefiltert. Als Beispiel sei die Tintenformulierung V1 aus Tabelle 1 erwähnt, die direkt nach der Herstellung eine Open-Time von 12 Minuten aufweist und nach 3 wöchiger Lagerzeit bei 60 °C noch eine Open-Time von 10 Minuten zeigte.

Es wurde ein Verfahren zur Herstellung einer erfindungsgemässen Hybridtinte, die eine Tintenstrahldrucktinte ist, offenbart, wobei dieses folgende Schritte umfasst:
i) Bereitstellen von getrennt vorliegenden Produkten einer zu mischenden Formulierung, wobei ein erstes Produkt als Komponente (a) Wasser umfasst, ein zweites Produkt als Komponente (b) ein UV-härtendes Oligo- und/oder Polymer mit ethylenisch ungesättigten funktionellen Gruppen umfasst, ein drittes Produkt als Komponente (c) ein Feuchthaltemittel umfasst, ein viertes Produkt als Komponente (d) ein radikalbildender Photoinitiator umfasst, wobei ein fünftes Produkt als Komponente (e) ein thermisch-härtendes Oligo- und/oder Polymer mit komplementären funktionellen umfasst, das so ausgebildet ist, dass es unter thermischer Einwirkung selbstvernetzend ist, wobei die komplementären funktionellen Gruppen ausgebildet sind untereinander Polyadditions- oder Polykondensationsreaktionen eingehen zu können,
ii) vor dem Bedrucken, mischen des ersten, zweiten, dritten, vierten und fünften Produkts.

Es sei an dieser Stelle erwähnt, dass ein Produkt eine Komponente entweder zu 100% als Reinprodukt oder lediglich zu <100% als Mischprodukt umfassen kann.

Gemäß einer weiteren bevorzugten Ausführungsform wird in Schritt i) zumindest ein weiteres Produkt bereitgestellt, welches als Komponente (f) ein vernetzendes Monomer mit mindestens zwei ethylenisch ungesättigten funktionellen Gruppen, vorzugsweise mindestens drei umfasst oder als Komponente (g) ein Farbmittel umfasst oder als Komponente (h) ein Gleit-und/oder Verlaufsadditiv umfasst oder als Komponente (i) ein Dispergiermittel umfasst oder als Komponente (j) ein Entschäumer umfasst und dass in Schritt ii) vor dem Bedrucken das zumindest eine Produkt mit den anderen Produkten gemischt wird.

Gemäß einer bevorzugten Ausführungsform kann in Schritt i) anstatt oder ergänzend zu den Komponenten (b) und (e) die Komponente (z) der zu mischenden Formulierung beigemischt wird.

In einer besonders bevorzugten Ausführungsform der Erfindung wird die Hybridtinte vor dem Bedrucken durch einen geeigneten Filter filtriert, um darin dispergierte Partikel (jeglicher Herkunft) mit einer Partikelgrössenverteilung von
i) d(0,99) < 3,0 µm, bevorzugt < 2,0 µm, und
ii) d(0,9) < 1,6 µm, bevorzugt < 0,8 µm, insbesondere < 0,4 µm und
iii) d(0,5) < 1,0 µm, bevorzugt < 0,5 µm, insbesondere < 0,25 µm zu erhalten.

## Patentansprüche

1. Hybridtinte auf Wasserbasis umfassend als Komponenten (a) Wasser, (b) UV-härtendes Oligo- und/oder Polymer mit ethylenisch ungesättigten funktionellen Gruppen, (c) ein Feuchthaltemittel, (d) einen radikalbildenden Photoinitiator, wobei die Hybridtinte eine Tintenstrahldrucktinte ist und **dadurch**
**gekennzeichnet ist, dass** diese weiter (e) ein thermisch-härtendes Oligo- und/oder Polymer mit komplementären funktionellen Gruppen umfasst, das so ausgebildet ist, dass es unter thermischer Einwirkung selbstvernetzend ist, wobei die komplementären funktionellen Gruppen ausgebildet sind untereinander Polyadditions- oder Polykondensationsreaktionen eingehen zu können.

2. Hybridtinte nach Anspruch 1 **dadurch gekennzeichnet, dass** die komplementären funktionellen Gruppen als Carbamat- und/oder Allophanat- und/oder Isocyanatgruppen ausgebildet sind und Komponente e) zu den vorgenannten Gruppen weitere komplementäre reaktive funktionelle Gruppen im Molekül aufweist, die bevorzugt als isocyanatreaktive funktionelle Gruppen, besonders bevorzugt Thiol-, Hydroxyl- und/oder primäre und/oder sekundäre Aminogruppen ausgebildet sind.

3. Hybridtinte nach Anspruch 1 oder 2 **dadurch gekennzeichnet, dass** die Tinte als weitere Komponente (f) ein vernetzendes Monomer mit mindestens zwei ethylenisch ungesättigten funktionellen Gruppen, vorzugsweise mindestens drei umfasst.

4. Hybridtinte nach zumindest einem der vorhergehenden Ansprüche **dadurch gekennzeichnet, dass** das UV-härtende Oligo- und/oder Polymer mit ethylenisch ungesättigten funktionellen Gruppen ein Oligo- und/oder Polyurethanacrylat ist.

5. Hybridtinte nach zumindest einem der vorhergehenden Ansprüche **dadurch gekennzeichnet, dass** die Tinte als weitere Komponente (g) ein Farbmittel umfasst.

6. Hybridtinte nach zumindest einem der vorhergehenden Ansprüche **dadurch gekennzeichnet, dass** das organische Feuchthaltemittel ausgewählt ist aus einem organischen Feuchtemittel mit einem Siedepunkt >160, bevorzugt grösser 170 Grad Celsius.

7. Hybridtinte nach zumindest einem der vorhergehenden Ansprüche **dadurch gekennzeichnet, dass** Feuchthaltemittel ein UV-härtendes Feuchthaltemittel ist, welches jeweils eine oder mehrere UV-härtende ethylenisch ungesättigte Gruppen aufweist.

8. Hybridtinte nach zumindest einem der vorhergehenden Ansprüche **dadurch gekennzeichnet, dass** die Tinte als weitere Komponente (h) ein Verlaufs und/oder Gleitadditiv umfasst.

9. Hybridtinte nach zumindest einem der vorhergehenden Ansprüche **dadurch gekennzeichnet, dass** die Hybridtinte zusätzlich zumindest eine weitere Komponente (b) und/oder zumindest eine weitere Komponente (e)umfasst.

10. Verfahren zur Herstellung eines bedruckten Artikels umfassend folgende Schritte:
a) bereitstellen eines Substrats,
b) bereitstellen einer erfindungsgemässen Hybridtinte auf Wasserbasis nach zumindest einem der Ansprüche 1 bis 9,
c) auftragen von Tropfen der Hybridtinte auf das Substrat,
d) zumindest teilweise Härten der UV-härtenden Komponente in den Tropfen unter Verwendung einer UV-Strahlungsquelle,
**dadurch gekennzeichnet, dass** in einem Schritt
e) ein zumindest teilweise Härten der thermisch-härtenden Komponente in den Tropfen unter Verwendung einer NIR und/oder IR -Strahlungsquelle und/oder eines Blasluftmittels erfolgt, wobei in Schritt e) Wasser und Feuchthaltemittel zumindest teilweise mit entfernt werden.

11. Verfahren nach Anspruch 10 **dadurch gekennzeichnet, dass** der Auftrag der Tintentropfen mittels eines Tintenstrahldruckers durch Bedrucken des Substrats erfolgt.

12. Verfahren nach Anspruch 10 oder 11 **dadurch gekennzeichnet, dass** die Tropfen eine Grösse in einem Bereich zwischen 5 und 40 Picoliter aufweisen.

13. Verfahren nach zumindest einem der Anspruch 10 bis 12 **dadurch gekennzeichnet, dass** das Auftragen der Tropfen unter Ausbildung eines Tintenfilms erfolgt.

14. Verfahren nach zumindest einem der Anspruch 10 bis 13 **dadurch gekennzeichnet, dass** in Schritt e) mittels Blasluftmittel auf die Tinte Luft geblasen wird, die eine Temperatur von etwa 15 bis etwa 90°C aufweist.

15. Verfahren nach zumindest einem der Ansprüche 10 bis 14 **dadurch gekennzeichnet, dass** die aufgetragenen Tropfen und/oder der ausgebildete Tintenfilm in Schritt d) einer UV-Strahlendosis in einem Bereich 50 bis 5000 mJ/cm², bevorzugt zwischen 100 und 1000 mJ/cm², besonders bevorzugt zwischen 100 und 500 mJ/cm² in ein vorbestimmtes Zeitintervall und in Schritt e) einer NIR-und/oder IR-Strahlungsquelle mit einer der Hybridtinte und dem Substrat angepassten Strahlendosis in ein vorbestimmtes Zeitintervall ausgesetzt werden, welches bevorzugt in einem Bereich zwischen 10 und 300 Sekunden liegt.

16. Verfahren nach zumindest einem der Ansprüche 10 bis 15 **dadurch gekennzeichnet, dass** der Tintenstrahldrucker mit einem scannenden Druckmodul, welches eine UV-Strahlungsquelle umfasst, und mit einem Substratvorschub arbeitet, wodurch eine Scanrichtung des Druckmoduls und eine Vorschubrichtung des Substrats definiert werden, wobei Vorschubrichtung und Scanrichtung sich unterscheiden und wobei mit dem scannenden Druckmodul auf dem Substrat gepinnte Druckzeilen bereitgestellt werden, welche anschliessend mit einer NIR- und/oder IR-Strahlungsquelle und/oder einem Blasluftmittel thermisch zumindest teilweise gehärtet werden, wobei die NIR- und/oder IR-Strahlungsquelle und/oder das Blasluftmittel gegenüber dem scannenden Druckmodul in Vorschubrichtung des Substrats stromabwärts angeordnet wird oder werden.

17. Verfahren zur Herstellung einer Hybridtinte, wobei die Hybridtinte eine Tintenstrahldrucktinte ist, umfassend folgende Schritte:
i) Bereitstellen von getrennt vorliegenden Produkten einer zu mischenden Formulierung, wobei ein erstes Produkt als Komponente (a) Wasser umfasst, ein zweites Produkt als Komponente (b) ein UV-härtendes Oligo- und/oder Polymer mit ethylenisch ungesättigten funktionellen Gruppen umfasst, ein drittes Produkt als Komponente (c) ein Feuchthaltemittel umfasst, ein viertes Produkt als Komponente (d) ein radikalbildender Photoinitiator umfasst, wobei ein fünftes Produkt als Komponente (e) ein thermisch-härtendes Oligo- und/oder Polymer mit komplementären funktionellen Gruppen umfasst, das so ausgebildet ist, dass es unter thermischer Einwirkung selbstvernetzend ist, wobei die komplementären funktionellen Gruppen ausgebildet sind untereinander Polyadditions- oder Polykondensationsreaktionen eingehen zu können,
ii) vor dem Bedrucken, mischen des ersten, zweiten, dritten, vierten und fünften Produkts.

18. Verfahren nach Anspruch 17 **dadurch gekennzeichnet, dass** in Schritt i) zumindest ein weiteres Produkt bereitgestellt wird, welches als Komponente (f) ein vernetzendes Monomer mit mindestens zwei ethylenisch ungesättigten funktionellen Gruppen, vorzugsweise mindestens drei umfasst oder als Komponente (g) ein Farbmittel umfasst oder als Komponente (h) ein Gleit- und/oder Verlaufsadditiv umfasst oder als Komponente (i) ein Dispergiermittel umfasst oder als Komponente (j) ein Entschäumer umfasst und dass in Schritt ii) vor dem Bedrucken das zumindest eine Produkt mit den anderen Produkten gemischt wird.

## Claims

1. A water-based hybrid ink comprising as components a) water, (b) UV-curing oligomer and/or polymer with ethylenically unsaturated functional groups, (c) a humectant, (d) a radical-forming photoinitiator, wherein the hybrid ink is an ink jet printer ink and
**characterized in that** it further comprises (e) a heat-curing oligomer and/or polymer with complementary functional groups which is designed such that it is self-crosslinking under thermal influence, wherein the complementary functional groups are designed such that they can undergo polyaddition or polycondensation reactions with each other.

2. The hybrid ink according to claim 1, **characterized in that** the complementary functional groups are designed as carbamate and/or allophanate and/or isocyanate groups and, in addition to the groups cited above, component (e) comprises further complementary functional reactive groups in the molecule, which are preferably designed as isocyanate-reactive functional groups, particularly preferred as thiol, hydroxyl and/or primary and/or secondary amino groups.

3. The hybrid ink according to claim 1 or 2, **characterized in that** the ink comprises as a further component (f) a crosslinking monomer with at least two ethylenically unsaturated functional groups, preferably at least three.

4. The hybrid ink according to at least one of the preceding claims, **characterized in that** the UV-curing oligomer and/or polymer with ethylenically unsaturated functional groups is an oligo- and/or polyurethane acrylate.

5. The hybrid ink according to at least one of the preceding claims, **characterized in that** the ink comprises a colorant as a further component (g).

6. The hybrid ink according to at least one of the preceding claims, **characterized in that** the organic humectant is chosen from an organic humectant with a boiling point >160 degrees Celsius, preferably greater than 170 degrees Celsius.

7. The hybrid ink according to at least one of the preceding claims, **characterized in that** the humectant is a UV-curing humectant, which exhibits one or more UV-curing ethylenically unsaturated groups.

8. The hybrid ink according to at least one of the preceding claims, **characterized in that** the ink comprises a lubricating and/or levelling additive as an additional component (h).

9. The hybrid ink according to at least one of the preceding claims, **characterized in that** the hybrid ink comprises additionally at least one further component (b) and/or at least one further component (e).

10. A method for producing a printed article comprising the following steps:
a) providing a substrate,
b) providing a water-based hybrid ink according to at least one of claims 1 to 9,
c) applying of droplets of the hybrid ink onto the substrate,
d) at least partial curing of the UV-curing component in the droplets using a UV radiation source,
**characterized in that,** in a step
e) at least a partial curing of the heat-curing component in the droplets takes place using a NIR and/or IR radiation source and/or a forced-air agent, wherein in step (e) water and humectant are at least partially removed.

11. The method according to claim 10, **characterized in that** the ink droplets are printed onto the substrate using an inkjet printer.

12. The method according to claim 10 or 11, **characterized in that** the droplets exhibit a size in a range between 5 and 40 picoliters.

13. The method according to at least one of claims 10 to 12, **characterized in that** the application of the droplets takes place by producing an ink film.

14. The method according to at least one of claims 10 to 13, **characterized in that** in step (e) air with a temperature between approximately 15 to approximately 90° C is blown over the ink by means of a forced-air agent.

15. The method according to at least one of claims 10 to 14, **characterized in that** the applied droplets and/or the developed ink film are exposed in step (d) to a UV radiation dose in a range between 50 and 5000 mJ/cm², preferably between 100 and 1000mJ/cm2, particularly preferably between 100 and 500 mJ/cm² over a predetermined time interval and in step (e) exposed to a NIR and/or IR radiation source with a radiation dose appropriate to the hybrid ink and the substrate over a predetermined time interval which is preferably between 10 and 300 seconds.

16. The method according to at least one of claims 10 to 15, **characterized in that** the inkjet printer operates with a scanning printing module which comprises a UV radiation source, and with a substrate feed, whereby a scan direction of the printing module and a feed direction of the substrate are defined, wherein the feed direction and the scan direction are different from one another, and wherein the scanning print module provides pinned print lines on the substrate, which are then at least partially cured thermally with an NIR and/or IR radiation source and/or a forced-air agent, wherein the NIR and/or IR radiation source and/or the forced air agent is or are located opposite the scanning print module, downstream in the feed direction of the substrate.

17. The method for producing a hybrid ink, wherein the hybrid ink is an inkjet printer ink comprising the following steps:
i) providing separate products of the formula to be mixed, wherein a first product comprises water as component (a), a second product comprises a UV-curing oligomer and/or polymer with ethylenically unsaturated functional groups as component (b), a third product comprises a humectant as component (c), a fourth product comprises a radical-forming photoinitiator as component (d), wherein a fifth product comprises a heat-curing oligomer and/or polymer with complementary functional groups as component (e), that is designed such that it is self-crosslinking under thermal influence, wherein the complementary functional groups are designed such that they can undergo polyaddition or polycondensation reactions with each other,
ii) before printing, mixing of the first, second, third, fourth, and fifth products.

18. The method according to claim 17, **characterized in that** in step i) at least one further product is provided which comprises a crosslinking monomer with at least two ethylenically unsaturated functional groups, preferably at least three, as component (f), or comprises a colorant as component (g) or comprises a lubricating and/or levelling additive as component (h) or comprises a dispersing agent as component (i) or comprises an anti-foaming agent as component (j) and that in step ii) the at least one product is mixed with the other products before printing.

## Revendications

1. L'encre hybride à base d'eau comprenant comme composants a) de l'eau, (b) un oligomère et/ou un polymère durcissant aux UV et ayant des groupes fonctionnels à insaturation éthylénique, (c) un humectant, (d) un photoinitiateur formant des radicaux, l'encre hybride étant une encre d'impression à jet d'encre et
**caractérisée en ce que** celle-ci comprend en outre (e) un oligomère et/ou polymère thermodurcissable ayant des groupes fonctionnels et complémentaires qui est conçu de manière à s'auto-réticuler sous l'influence thermique, les groupes fonctionnels complémentaires étant conçus de manière à pouvoir subir des réactions de polyaddition ou de polycondensation les uns avec les autres.

2. L'encre hybride selon la revendication 1 **caractérisée en ce que** les groupes fonctionnels complémentaires sont conçus comme groupes carbamates et/ou allophanates et/ou isocyanates et, outre les groupes précités, le composant e) comprend d'autres groupes fonctionnels complémentaires et réactifs dans le molecule, qui de préférence sont conçus comme groupes fonctionnels réactifs vis-à-vis d'un isocyanate, de manière particulièrement préférée comme groupes thiol, hydroxyle et/ou groupes amino primaires et/ou secondaires.

3. L'encre hybride selon la revendication 1 ou 2, **caractérisée en ce que** l'encre comprend comme autre composant (f) un monomère réticulant avec au moins deux groupes fonctionnels à insaturation éthylénique, de préférence au moins trois.

4. L'encre hybride selon au moins l'une des revendications précédentes, **caractérisée en ce que** l'oligomère et/ou le polymère durcissant aux UV et ayant des groupes fonctionnels à insaturation éthylénique est un oligouréthane acrylate et/ou un polyuréthane acrylate.

5. L'encre hybride selon au moins l'une des revendications précédentes, **caractérisée en ce que** l'encre comprend un colorant comme composant supplémentaire (g).

6. L'encre hybride selon au moins l'une des revendications précédentes, **caractérisée en ce que** l'humectant organique est choisi parmi un humectant organique ayant un point d'ébullition > 160, de préférence supérieur à 170 degrés Celsius.

7. L'encre hybride selon au moins l'une des revendications précédentes, **caractérisée en ce que** l'humectant est un humectant durcissant aux UV, qui présente à chaque fois un ou plusieurs groupes durcissant aux UV à insaturation éthylénique.

8. L'encre hybride selon au moins l'une des revendications précédentes, **caractérisée en ce que** l'encre comprend un additif nivelant et/ou glissant comme composant supplémentaire (h).

9. L'encre hybride selon au moins l'une des revendications précédentes, **caractérisée en ce que** l'encre hybride comprend en plus au moins un composant supplémentaire (b) et/ou au moins un composant supplémentaire (e).

10. Le procédé de production d'un article imprimé comprenant les étapes suivantes
a) fournir un substrat,
b) fournir une encre hybride à base d'eau selon l'invention selon au moins l'une des revendications 1 à 9,
c) appliquer des gouttes de l'encre hybride sur le substrat,
d) durcir au moins partiellement le composant durcissant aux UV dans les gouttes en utilisant une source de rayonnement UV,
**caractérisé en ce que** dans une étape
e) le composant thermodurcissable est durci au moins partiellement dans les gouttes au moyen d'une source de rayonnement NIR et/ou IR et/ou d'un moyen d'air de soufflage, l'eau et l'humectant étant éliminés au moins partiellement dans l'étape e).

11. Le procédé selon la revendication 10, **caractérisé en ce que** les gouttes d'encre sont appliquées au moyen d'une imprimante à jet d'encre par impression sur le substrat.

12. Le procédé selon la revendication 10 ou 11, **caractérisé en ce que** la taille des gouttes est dans une plage comprise entre 5 et 40 picolitres.

13. Le procédé selon au moins l'une des revendications 10 à 12, **caractérisé en ce que** les gouttes sont appliquées en formant un film d'encre.

14. Le procédé selon au moins l'une des revendications 10 à 13, **caractérisé en ce que** dans l'étape e) de l'air est soufflé sur l'encre par un moyen d'air de soufflage, ledit air ayant une température d'environ 15 à environ 90°C.

15. Le procédé selon au moins l'une des revendications 10 à 14, **caractérisé en ce que** les gouttes appliquées et/ou le film d'encre formé sont exposés dans l'étape d) à une dose de rayonnement UV dans une plage comprise entre 50 à 5000 mJ/cm², de préférence entre 100 et 1000 mJ/cm², de manière particulièrement préférée entre 100 et 500 mJ/cm² dans un intervalle de temps prédéterminé et, dans l'étape e), à une source de rayonnement NIR et/ou IR avec une dose de rayonnement adaptée à l'encre hybride et au substrat dans un intervalle de temps prédéterminé, qui est de préférence dans une plage comprise entre 10 et 300 secondes.

16. Le procédé selon au moins l'une des revendications 10 à 15, **caractérisé en ce que** l'imprimante à jet d'encre travaille avec un module d'impression à balayage qui comprend une source de rayonnement UV et avec un avancement de substrat, ce qui permet de définir une direction de balayage du module d'impression et une direction d'avancement du substrat, la direction d'avancement et la direction de balayage se différant, et des lignes d'impression épinglées étant prévues sur le substrat au moyen du module d'impression à balayage, ces lignes étant ensuite au moins partiellement durcies par voie thermique avec une source de rayonnement NIR et/ou IR et/ou un moyen d'air de soufflage, la source de rayonnement NIR et/ou IR et/ou le moyen d'air de soufflage étant disposé(s) en aval, dans la direction de l'avancement du substrat, par rapport au module d'impression à balayage.

17. Le procédé de fabrication d'une encre hybride, l'encre hybride étant une encre d'impression à jet d'encre comprenant les étapes suivantes :
i) fournir des produits séparés d'une formule à mélanger, un premier produit comprenant de l'eau comme composant (a), un deuxième produit comprenant un oligomère et/ou un polymère durcissant aux UV et ayant des groupes fonctionnels à insaturation éthylénique comme composant (b), un troisième produit comprenant un humectant comme composant (c), un quatrième produit comprenant un photoinitiateur formant des radicaux comme composant (d), un cinquième produit comprenant un oligomère et/ou un polymère thermodurcissable avec des groupes fonctionnels complémentaires comme composant (e), qui est conçu de manière à s'auto-réticuler sous l'influence thermique, les groupes fonctionnels complémentaires étant conçus de manière à pouvoir subir des réactions de polyaddition ou de polycondensation les uns avec les autres.
ii) avant l'impression, mélanger les premier, deuxième, troisième, quatrième et cinquième produits.

18. La méthode selon la revendication 17, **caractérisée en ce que** dans l'étape i) au moins un produit supplémentaire est fourni qui comprend un monomère réticulant avec au moins deux groupes fonctionnels à insaturation éthylénique, de préférence au moins trois, comme composant (f), ou qui comprend un colorant comme composant (g) ou qui comprend un additif glissant et/ou nivelant comme composant (h) ou qui comprend un agent dispersant comme composant (i) ou qui comprend un agent anti-mousse comme composant (j) et que, dans l'étape ii), le au moins un produit est mélangé avec les autres produits avant l'impression.
